Europäisches Patentamt

(19) European Patent Office

Office européen des brevets

(11) Publication number: 0 131 742

A2

# (12) EUROPEAN PATENT APPLICATION

(21) Application number: 84106576.6

(22) Date of filing: 08.06.84

(51) Int. Cl.⁴: G 02 B 6/24

(30) Priority: 08.06.83 JP 101938/83
11.08.83 JP 145655/83

(43) Date of publication of application:
23.01.85 Bulletin 85/4

(84) Designated Contracting States:
DE FR GB

(71) Applicant: Kabushiki Kaisha Toshiba
72, Horikawa-cho Saiwai-ku
Kawasaki-shi Kanagawa-ken 210(JP)

(71) Applicant: OKI ELECTRIC CABLE CO., LTD.
629 Shimoodanaka Nakahara-ku
Kawasaki-shi(JP)

(72) Inventor: Katagiri, Shuhei c/o Patent Division
KABUSHIKI KAISHA TOSHIBA 1-1, Shibaura 1-chome
Minato-ku Tokyo 105(JP)

(72) Inventor: Donuma, Kenichi c/o Patent Division
KABUSHIKI KAISHA TOSHIBA 1-1, Shibaura 1-chome
Minato-ku Tokyo 105(JP)

(72) Inventor: Takai, Hirosi
40-1-1-155, Ooya
Ebina-shi, Kanagawa-ken(JP)

(72) Inventor: Hori, Aiichiro
2260-1, Nogawa
Takatsu-ku, Kawasaki-shi(JP)

(74) Representative: Patentanwälte Henkel, Pfenning, Feiler,
Hänzel & Meinig
Möhlstrasse 37
D-8000 München 80(DE)

(54) A method for coupling the end section of an optical fiber cable to an optical connector.

(57) A method for coupling the end section of an optical fiber cable (2) to an optical connector (4) with a through hole, the optical fiber cable (2) having a core (8) and a silicone cladding (10) covered with a jacket layer (12), comprises the steps of peeling off the jacket layer (12) for a predetermined length from an end of the optical fiber cable (2) along the axial direction thereof to expose the silicone cladding (10), inserting an exposed portion of the silicone cladding into a deformable sleeve member (14), and compressing the sleeve member (14) to bring the sleeve member (14) into tight contact with the exposed silicone cladding (10), and inserting the silicone cladding (10) and the part of the jacket layer (12) into the through hole of the optical connector (4) after an adhesive (16) is applied to the outer surface of the sleeve member (14) and/or the inner surface of the through hole of the optical connector (4), and adhering the sleeve member (14) to the optical connector (4), thereby coupling the end section of the optical fiber cable (2) to the optical connector (4). The sleeve member (14) is brought into tight contact with the silicone cladding (10), and the sleeve member (14) is secured to the optical connector (4) by the adhesive (16), whereby the end section of the optical fiber cable (2) is rigidly fixed to the optical connector.

F I G. 2

- 1 -

A method for coupling the end section of
an optical fiber cable to an optical connector

The present invention relates to a method for coupling the end section of an optical fiber cable to an optical connector.

In general, an optical fiber cable comprises a core and a cladding with a jacket layer. In an optical fiber of this type, the core comprises silica glass containing $SiO_2$ as the major component from the viewpoint of excellent optical transmission characteristics and long-term reliability. The cladding may comprise silica glass, multicomponent glass, silicone resin or the like. However, the cladding is desired to be made of silicone resin in consideration of optical transmission loss of the optical fiber and fabrication cost.

An optical fiber cable which has a silica glass core and a silicone resin cladding will be described throughout the specification. In order to couple the end section of the optical fiber cable of this type to the optical connector, the exposed silicone cladding and jacket layer are adhered to the optical connector by an adhesive such as an epoxy resin. However, when the end section of the optical fiber cable is coupled to the optical connector with the adhesive alone, the adhesion strength is decreased by thermal expansion and contraction stress of the jacket layer, because of poor adhesion between the cladding and the adhesive. The optical fiber cable is moved relative to the optical connector, resulting in misalignment.

Another conventional method is proposed to prevent misalignment as described above. A jacket layer is peeled off from the optical fiber cable, and is not brought into contact with the optical connector to form a space corresponding to the jacket layer. Therefore, the thermal expansion and contraction stress of the jacket layer are prevented. However, in this method, only the exposed silicone cladding is coupled to the optical connector. The tensile strength is very small, and the optical fiber cable can be easily removed from the optical connector, resulting in inconvenience.

Still another conventional method is proposed to further reinforce the adhesion between the silicone cladding and the adhesive. According to this method, a jacket layer and a silicone cladding are peeled off, and another cladding adhesive to a glass core, is formed on the silica glass core. The end section of the optical fiber cable which is modified as described above is adhered to the optical connector. However, this method results in time-consuming handling and low reliability.

In all these conventional methods, the coupling between the end section of the optical fiber cable and the optical connector does not improve reliability.

It is an object of the present invention to overcome the above problems and drawbacks, and to provide a method for coupling the end section of an optical fiber cable of silicone cladding type to an optical connector.

In order to achieve the above object of the present invention, there is provided a method for coupling the end section of an optical fiber cable to an optical connector with a through hole, the optical fiber cable having a core and a silicone cladding covered with a jacket layer, comprising the steps of peeling off said jacket layer for a predetermined length from the end of said optical fiber cable along an axial direction thereof to expose said silicone cladding, inserting an exposed portion of said silicone cladding into a deformable sleeve member, and compressing said sleeve member to bring said sleeve member into tight contact with said exposed silicone cladding, and inserting said silicone cladding and a part of said jacket layer into said optical connector after an adhesive is applied to the outer surface of said sleeve member and/or the inner surface of the through hole of said optical connector, and adhering said sleeve member to said optical connector, thereby coupling the end section of said optical fiber cable to said optical connector.

According to the method of the present invention, the sleeve member is brought into tight contact with the silicone cladding, and the sleeve member is secured to the optical connector by the adhesive, whereby the end section of the optical fiber cable is rigidly fixed to the optical connector. The silicone cladding serves as a absorbent layer when the optical fiber of a silicone cladding type is compressed, so that it will be eliminated that the silica glass core is broken. In addition, the sleeve member is used as a caulking member to prevent the optical fiber cable from being bent.

Furthermore, according to the method of the present invention, the sleeve member need not clamp the silicone cladding, but may clamp be the jacket layer. In this case, by compressing the sleeve member mounted on the jacket layer, the thermal expansion and compression stresses of the jacket layer can be reduced, so that the displacement of the optical fiber cable relative to the optical connector will be eliminated.

Furthermore, according to the present invention, both the sleeve member mounted on the silicone cladding and the sleeve member mounted on the jacket layer may be used to couple the end section of the optical fiber cable and the optical connector.

This invention can be more fully understood from the following detailed description when taken in conjunction with the accompanying drawings, in which:

Fig. 1 is a partially cutaway perspective view showing the construction wherein the end section of an optical fiber cable is connected to one type of plug unit as an optical connector according to an embodiment of a method of the present invention;

Fig. 2 is an enlarged sectional view showing the coupling between the end section of the optical fiber cable and the optical connector, shown in Fig. 1;

Fig. 3 is a schematic perspective view showing a type of sleeve member shown in Fig. 2 used to couple the end section of the optical fiber cable to the optical connector;

Fig. 4 is a schematic perspective view showing another type of sleeve member having a slit different from that of the sleeve member shown in Fig. 3;

Fig. 5 is an enlarged sectional view showing the coupling between the end section of an optical fiber cable and an optical connector in the same manner as in Fig. 2, according to a second embodiment of the present invention; and

Fig. 6 is an enlarged sectional view showing the coupling between the end section of an optical fiber cable and an optical connector in the same manner as in Fig. 2, according to a third embodiment of the present invention.

The construction of the end section of an optical fiber cable coupled to an optical connector according to a method of the present invention will now be described.

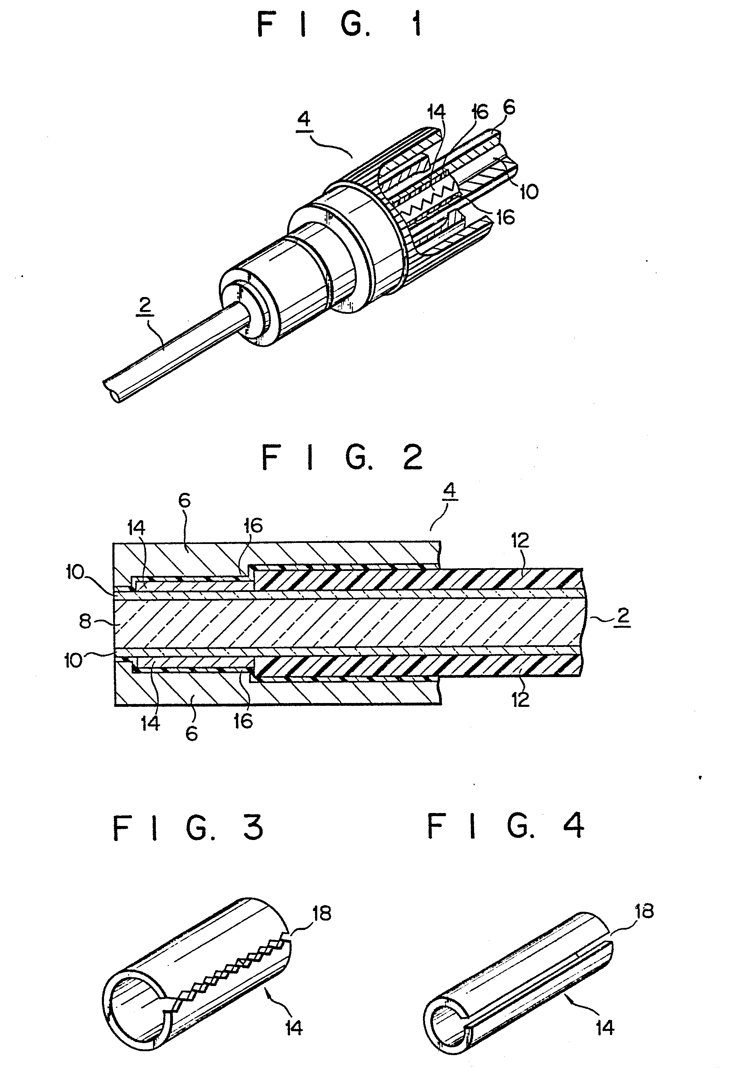

Figs. 1 and 2 show an embodiment of the end section of an optical fiber cable coupled to an optical connector according to the method of the present invention. Referring to Fig. 1, the end section of an optical fiber cable 2 is coupled to a ferrule 6 of an optical connector 4 as one type of plug unit. Fig. 2 is an enlarged sectional view of the end section of the optical fiber cable 2. The end section of the optical fiber cable 2 is coupled to the inside of the ferrule 6 of the optical connector 4.

The optical connector 4 has a through hole into which the optical fiber cable 2 is inserted. The part of the through hole corresponding to the ferrule 6 is shown in Figs. 1 and 2.

Referring to Figs. 1 and 2, the optical fiber cable 2 has a known multilayer structure and comprises a core 8 capable of transmitting light, a cladding 10 covering the outer surface of the core 8, and a jacket layer 12 covering the outer surface of the cladding 10. The core 8 is made of silica glass. The cladding 10 is made of an elastic silicone resin material. The jacket layer 12 is made of a relatively soft material, e.g., "Surlyn A" (tradename Du Pont). A tension member (not shown) and a sheath member (not shown) cover the outer surface of the jacket layer 12 of the optical fiber cable 2.

As shown in Fig. 2, in the end section of the optical fiber cable 2 described above, the jacket layer 12 is peeled off for a predetermined length from an end of the optical fiber cable 2 along the axial direction thereof. This length is determined in accordance with the length of the ferrule 6 of the optical connector 4. A sleeve member 14 to be described later is brought into tight contact with substantially the entire circumference of the exposed portion of the silicone cladding 10. The ferrule 6 of the optical connector 4 is adhered to the outer surface of the sleeve member 14 by an epoxy-resin based adhesive 16. The ferrule 6 of the optical connector 4 is adhered to the silicone cladding 10 at one end of the sleeve member 14 and the jacket layer 12 of the optical fiber cable 2 at the other end of the sleeve member 14 by the epoxy-resin based adhesive 16.

Figs. 3 and 4 show two typical sleeve members 14 before use. The sleeve members 14 are generally deformable caulking members called spring pins. More particularly, the sleeve members 14 have different shaped slits 18, as shown in Figs. 3 and 4, respectively. A zigzag slit 18 is formed in the sleeve 14 shown in Fig. 3 along an axis thereof. A linear slit 18 is formed in the sleeve member 14 shown in Fig. 4 along an axis thereof. The slit 18 is not limited to a linear or zigzag slit but need only be one such that a gap thereof is closed when the sleeve member 14 is pressed along a radial direction. The sleeve member 14 is made of a deformable material which can be deformed upon compression. The sleeve member 14 is preferably made of stainless steel or phosphor bronze.

A method of coupling the end section of the optical fiber cable to the optical connector will be described.

The jacket layer 12 is peeled off for the predetermined length from one end of the multilayer optical fiber cable 2 along the axial direction thereof, thereby exposing the surface of the silicone cladding 10. The exposed portion of the silicone cladding 10 is inserted in the deformable sleeve member 14. The sleeve member 14 is caulked by a caulking tool, so that the inner surface of the sleeve member 14 is brought into tight contact with the outer surface of the silicone cladding 10. The epoxy-resin based adhesive 16 is applied to the outer surface of the sleeve member 14 and/or the inner surface of the through hole of the optical connector 4. Thereafter, the silicone cladding 10 and the part of the jacket layer 12 are inserted in the through hole of the optical connector 4 so as to adhere the sleeve member 14 to the ferrule 6 of the optical connector 4, whereby, the end section of the optical fiber cable 2 is coupled to the optical connector 4.

According to the present invention, the sleeve member 14 as the caulking member is used to prevent the optical fiber cable 2 from being bent.

When the sleeve member 14 on the silicone cladding 10 is compressed by the caulking tool, the thickness of the silicone cladding 10 after compression is set to be about 70% or more of its thickness before compression so as to prevent the glass core 8 from being damaged.

According to the embodiment described above, after a filler such as a silicone-resin based adhesive is applied between the silicone cladding 10 and the sleeve member 14, the sleeve member 14 may be caulked. In this case, it is possible to decrease the rate of compressing the silicone cladding 10, and the optical connector 4 can more firmly hold the optical fiber cable 2 therein.

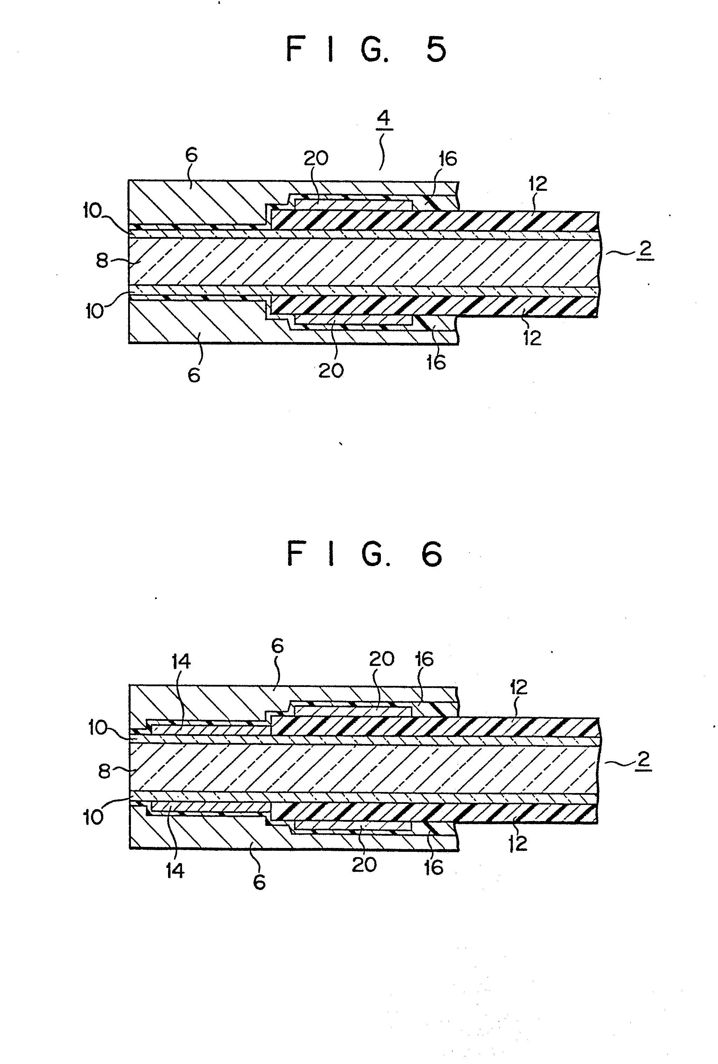

Furthermore, according to the method of the present invention, the sleeve member 14 need not clamp the silicone cladding, but may clamp the jacket layer 12. This modification is shown as a second embodiment in Fig. 5. The same reference numerals used in Fig. 5 denote the same parts as in Fig. 2.

In the second embodiment shown in Fig. 5, an exposed portion of the jacket layer 12 of an optical fiber cable is inserted in the sleeve member 20. The sleeve member 20 is compressed at the outer surface thereof so as to bring the inner surface of the sleeve member 20 into tight contact with the outer surface of the jacket layer 12. After the adhesive 16 is applied to the outer surface of the sleeve 20 and/or the inner surface of the through hole of the optical connector 4, the resultant assembly is inserted in the through hole of the optical connector 4, and the sleeve member 20 is adhered to the optical connector 4, thereby coupling the end section of the optical fiber cable 2 to the optical connector 4.

By the sleeve member 20 mounted on the jacket layer 12, the thermal expansion and contraction stress of the jacket layer 12 can be reduced, so that the displacement of the optical fiber cable 2 relative to the optical connector 4 will be eliminated.

In the same manner as the previous embodiment, the silicone cladding 10 serves as a absorbent layer for reducing a force acting on the optical fiber 2. In addition, when a soft material is chosen as the jacket layer 12, the absorbent effect can be increased.

In the second embodiment, when the sleeve member 20 on the jacket layer 12 is compressed, the thickness of the jacket layer 12 after compression is set to be about 60% or more of its thickness before compression so as to prevent the silica glass core 8 from damage.

Furthermore, according to the method of the present invention, by combining the sleeve member 14 (Fig. 2) and the sleeve member 20 (Fig. 5), the end section of the optical fiber cable 2 may be coupled to the optical connector 4 as shown in Fig. 6.

Fig. 6 shows a third embodiment of the present invention. The same reference numerals as used in Figs. 2 and 5 denote the same parts in Fig. 6.

Referring to Fig. 6, a part of an exposed jacket layer 12 of an optical fiber cable is peeled off to constitute the silicone cladding 10 and the jacket layer 12 in a stepwise manner at the end section of the optical fiber cable 2. The silicone cladding 10 and the jacket layer 12 are inserted into deformable sleeve members 14 and 20, respectively. The sleeve members 14 and 20 are compressed at the outer surfaces thereof so as to bring their inner surfaces into tight contact with the silicone cladding 10 and the jacket layer 12, respectively. After the adhesive 16 is applied to the outer surfaces of the sleeve members 14 and 20 and/or the inner surface of the through hole of the optical connector 4, and the end section of the optical fiber cable 2 is inserted into the through hole of the optical connector 4. The sleeve members 14 and 20 are adhered to the optical connector 4, whereby the end section of the optical fiber cable 2 is coupled to the optical connector 4.

According to this embodiment, the jacket layer 12 and the silicone cladding 10 serve as absorbent layers, which prevent the silica glass core 8 from being damaged. In addition, the sleeve member 14 as the caulking member is used to prevent the optical fiber cable 2 from being bent. At the same time, the sleeve member 20 prevents the thermal expansion and contraction stress of the jacket layer 12.

In the above embodiments, a certain type of plug is exemplified as an optical connector. The method of the present invention can also be applied to another type of plug such as a bidirectional plug for coupling the end section of the optical fiber cable and the optical connector.

- 1 -                                    0131742

Claims:

1. A method for coupling the end section of an optical fiber cable to an optical connector with a through hole, the optical fiber cable having a core and a silicone cladding covered with a jacket layer, wherein said jacket layer is peeled off for a predetermined distance from the end of said optical fiber cable along an axial direction thereof to expose said silicone cladding, the end section of said optical fiber cable is coupled to said optical connector characterized in that said silicone cladding is inserted into a deformable sleeve member, said sleeve member is compressed to bring the outer surface of said sleeve member into tight contact with the outer surface of said silicone cladding, and said silicone cladding and a part of said jacket layer are inserted in the through hole of said optical connector after the adhesive is applied to the outer surface of said sleeve member and/or the inner surface of the through hole of said optical connector, thereby said sleeve member is adhered to said optical connector, whereby the end section of said optical fiber cable is coupled to said optical connector.

2. A method according to claim 1, characterized in that the adhesive is an epoxy-resin based adhesive.

3. A method according to claim 2, characterized in that the step of compressing said sleeve member comprises caulking said sleeve member toward a center thereof.

4. A method according to claim 3, characterized in that said sleeve member has a slit along an axial direction thereof, said slit having a zigzag shape.

5. A method according to claim 3, characterized in that said sleeve member has a slit along an axial direction thereof, said slit having a linear shape.

6. A method according to claim 3, characterized in that said sleeve member is made of stainless steel.

- 2 -

0131742

7. A method according to claim 3, characterized in that said sleeve member is made of phosphor bronze.

8. A method according to claim 3, characterized by further comprising the step of applying a silicone-resin based adhesive to the outer surface of said sleeve member and/or said silicone cladding before the step of bringing said sleeve member into tight contact with said silicone cladding.

9. A method according to claim 1, characterized in that an exposed portion of said jacket layer is inserted in said deformable sleeve member, said sleeve member is compressed at the outer surface thereof, the outer surface of said sleeve member is brought into tight contact with said jacket layer, and said jacket layer is inserted into the through hole of said optical connector after the adhesive is applied to the outer surface of said sleeve member and/or the inner surface of the through hole of said optical connector to adhere said sleeve member to said optical connector, whereby the end section of said optical fiber cable is coupled to said optical connector.

10. A method according to claim 1, characterized in that said method further includes the step of inserting the exposed portion of said jacket layer into a second deformable sleeve member, and compressing said second sleeve member to bring the outer surface of said second sleeve member into tight contact with said jacket layer, and in that the end section of said optical fiber cable is inserted in the through hole of said optical connector after the adhesive is applied to the outer surfaces of said sleeve members and/or the inner surface of the through hole of said optical connector to adhere said sleeve members to said optical connector, whereby the end section of said optical fiber cable is coupled to said optical connector.

F I G. 1

F I G. 2

F I G. 3

F I G. 4

212

# FIG. 5

# FIG. 6